# FASCICULE DE BREVET EUROPEEN

(11) **EP 1 674 514 B1**
(45) Date de publication et mention de la délivrance du brevet: **22.12.2010**
(21) Numéro de dépôt: 05301094.8
(22) Date de dépôt: 22.12.2005
(51) Int. Cl.: C08K 5/00, H01B 7/295, H01B 3/30

(54) **Composition résistante au feu notamment pour matériau de câble d'énergie et/ou de télécommunication**
Feuerfeste Zusammensetzung insbesondere als Material für Energie- und/oder Telekommunikationkabel
Fire-resistant composition in particular as material for energy and/or telecommunication cables

(30) Priorité: 24.12.2004 FR 0453225
(43) Date de publication de la demande: 28.06.2006
(73) Titulaire: Nexans, 75008 Paris (FR)
(72) Inventeur: Fournier, Jérôme, 69006, Lyon (FR); Koelblin, Christian, 01800, Meximieux (FR)
(74) Mandataire: Feray, Valérie

(56) Documents cités:
- EP-A- 1 347 107
- ES-A1- 2 155 321
- US-A- 1 914 097
- PATENT ABSTRACTS OF JAPAN vol. 2000, no. 06, 22 septembre 2000 (2000-09-22) & JP 2000 084908 A (MITSUBISHI CHEM MKV CO), 28 mars 2000 (2000-03-28)

## Description

La présente invention concerne une composition pour un matériau capable de résister à des conditions thermiques extrêmes.

L'invention trouve une application particulièrement avantageuse, mais non exclusive, dans le domaine des câbles d'énergie ou de télécommunication qui sont destinés à rester opérationnels pendant un temps défini lorsqu'ils sont soumis à de fortes chaleurs et/ou directement à des flammes.

Aujourd'hui, un des enjeux majeurs de l'industrie du câble est l'amélioration du comportement et des performances des câbles dans des conditions thermiques extrêmes, notamment celles rencontrées lors d'un incendie. Pour des raisons essentiellement de sécurité, il est en effet indispensable de maximiser les capacités du câble à retarder la propagation des flammes d'une part, et à résister au feu d'autre part. Un ralentissement significatif de la progression des flammes, c'est autant de temps gagné pour évacuer les lieux et/ou pour mettre en oeuvre des moyens d'extinction appropriés. Une meilleure résistance au feu offre au câble la possibilité de fonctionner plus longtemps, sa dégradation étant moins rapide. Un câble de sécurité se doit en outre de ne pas être dangereux pour son environnement, c'est-à-dire de ne pas dégager de fumées toxiques et/ou trop opaques lorsqu'il est soumis à des conditions thermiques extrêmes.

Qu'il soit électrique ou optique, destiné au transport d'énergie ou à la transmission de données, un câble est schématiquement constitué d'au moins un élément conducteur s'étendant à l'intérieur d'au moins un élément isolant. Il est à noter qu'au moins un des éléments isolants peut également jouer le rôle de moyen de protection et/ou que le câble peut comporter en outre au moins un élément de protection spécifique, formant gaine. Or il est connu que parmi les meilleurs matériaux isolants et/ou de protection utilisés dans la câblerie, nombre d'entre eux sont malheureusement aussi d'excellentes matières inflammables. C'est notamment le cas des polyoléfines et de leurs copolymères, comme par exemple le polyéthylène, le polypropylène, les copolymères d'éthylène et d'acétate de vinyle, les copolymères d'éthylène et de propylène. Quoi qu'il en soit, dans la pratique, cette inflammabilité excessive s'avère totalement incompatible avec les impératifs de tenue au feu précédemment évoqués.

Dans le domaine de la câblerie, il existe de nombreuses méthodes pour améliorer le comportement au feu des polymères employés comme matériaux d'isolation et/ou de gainage.

La solution la plus répandue jusqu'à maintenant a consisté à employer des composés halogénés, sous forme d'un sous-produit halogéné dispersé dans une matrice polymère, ou directement sous forme d'un polymère halogéné comme dans le cas d'un PVC par exemple. Cependant, les réglementations actuelles tendent désormais à interdire l'utilisation de ce type de substances en raison essentiellement de leur toxicité et de leur corrosivité potentielles, que ce soit au moment de la fabrication du matériau, ou lors de sa décomposition par le feu. Ceci est d'autant plus vrai que la décomposition en question peut intervenir accidentellement lors d'un incendie, mais également volontairement au cours d'une incinération. Quoi qu'il en soit, le recyclage des matériaux halogénés demeure toujours particulièrement problématique.

C'est pourquoi on a de plus en plus recours à des charges ignifugeantes non halogénées, et notamment aux hydroxydes métalliques tels que l'hydroxyde d'aluminium ou l'hydroxyde de magnésium. Ce type de solutions techniques présente toutefois l'inconvénient de nécessiter de grandes quantités de charges pour atteindre un niveau d'efficacité satisfaisant, que ce soit en terme de capacité à retarder la propagation des flammes, que de résistance au feu. A titre d'exemple, la teneur en hydroxydes métalliques peut atteindre typiquement 150 à 200 parties en poids pour 100 parties en poids de résine polymère.

Or toute incorporation massive d'une charge induit une augmentation considérable de la viscosité du matériau qui la reçoit. Cela génère alors inévitablement une diminution notable de la vitesse d'extrusion, et conséquemment une baisse significative de productivité qui va malheureusement se répercuter au final négativement dans le prix de revient du matériau composite.

Mais indépendamment de cet aspect procédé, les charges ignifugeantes non halogénées s'avèrent de toute façon intrinsèquement relativement onéreuses. Et comme elles doivent être utilisées en quantités importantes, cela grève d'autant plus le coût des matériaux dans lesquels elles sont dispersées.

JP 2000 084908 A divulgue une composition résistante au feu qui comprend un polymère de type thermoplastique, du liège en poudre de granulométrie 200-5000 µm et un ignifugeant secondaire.

Aussi, le problème technique à résoudre par l'objet de la présente invention, est de proposer une composition résistante au feu notamment pour un matériau de câble d'énergie et/ou de télécommunication, ladite composition comprenant un polymère et une charge ignifugeante, composition qui permettrait d'éviter les problèmes de l'état de la technique en étant notamment sensiblement moins onéreuses, tout en garantissant de bonnes performances en terme de tenue au feu.

La solution au problème technique posé consiste, selon la présente invention, en ce que le polymère est de type thermoplastique, et en ce que la charge ignifugeante comporte du liège sous forme de poudre de granulométrie inférieure à 200 µm.

On précise que la locution "polymère de type thermoplastique" désigne indifféremment un polymère thermoplastique ou un polymère thermoplastique élastomère, et que le liège peut se présenter sous toute forme susceptible d'être dispersée dans la matrice polymère.

Quoi qu'il en soit, l'invention telle qu'ainsi définie présente l'avantage d'offrir un prix de revient particulièrement bas en raison du coût extrêmement peu élevé de sa charge ignifugeante, surtout comparé à celui des charges conventionnelles de l'état de la technique. Cela constitue un intérêt économique majeur dans le domaine de la câblerie, puisqu'il est susceptible de favoriser la diffusion des câbles ignifugés.

Si on ajoute à cela le fait que l'utilisation d'une charge ignifugeante à base de liège permet par ailleurs d'améliorer sensiblement la tenue au feu d'un matériau polymère par rapport à ses homologues de l'art antérieur, il apparaît alors clairement qu'une composition conforme à l'invention présente un avantageux rapport prix/performances.

Le liège de la charge ignifugeante se présente sous forme de poudre.

Il est entendu que le terme poudre désigne ici, très généralement, toute substance solide divisée en très petites particules homogènes. Cela signifie que les particules en question peuvent se présenter sous des formes tout à fait quelconques, ne correspondant pas forcément et strictement à celles de grains. On pense notamment ici à des fibres.

Quoi qu'il en soit, la granulométrie de la poudre de liège est inférieure à 200µm.

Selon une particularité de l'invention, le polymère est choisi parmi un polyéthylène, un polypropylène, un copolymère d'éthylène et de propylène (EPR), un terpolymère-éthylène-propylène-diène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, un polyétherimide, un polyuréthane thermoplastique, un polyester, un polyamide ou un quelconque mélange de ces composants.

Conformément à une autre caractéristique avantageuse de l'invention, la composition comporte entre 5 et 100 parties en poids de charge ignifugeante pour 100 parties en poids de polymère, et de préférence entre 10 et 30 parties en poids de charge ignifugeante.

Selon une autre particularité de l'invention, la composition est dotée en outre d'au moins un agent ignifugeant secondaire.

De manière particulièrement avantageuse, chaque agent ignifugeant secondaire est choisi parmi les composés contenant du phosphore tels que les phosphates organiques ou inorganiques, les composés contenant de l'antimoine tels que l'oxyde d'antimoine, les hydroxydes métalliques tels que l'hydroxyde d'aluminium et l'hydroxyde de magnésium, les composés à base de bore tels que les borates, les carbonates des métaux alcalins des groupes IA et IIA comme les carbonates de calcium, sodium, potassium ou magnésium et les hydroxycarbonates correspondants, les composés à base d'étain tels que stannates et hydroxystannates, la mélamine et ses dérivés tels que les mélamines phosphates, les résines formophénoliques.

Selon une autre particularité de l'invention, la composition est en outre pourvue d'au moins un additif choisi parmi le groupe des pigments, des antioxydants, des stabilisants ultraviolets, ainsi que des aides à la mise en oeuvre comme par exemple des lubrifiants, des plastifiants et des stabilisants thermiques.

L'invention concerne également tout câble comportant au moins un élément conducteur s'étendant à l'intérieur d'au moins un revêtement isolant, et dont au moins un revêtement isolant est réalisé à partir d'une composition telle que précédemment décrite.

L'invention est par ailleurs relative à tout câble doté d'au moins un élément conducteur s'étendant à l'intérieur d'au moins un revêtement isolant, et comportant en outre au moins une gaine de protection réalisée à partir d'une composition telle que précédemment décrite.

Il est à noter que la locution "élément conducteur" désigne aussi bien un conducteur électrique qu'un conducteur optique. Par ailleurs, et dans tous les cas de figure, il peut s'agir indifféremment d'un câble électrique ou optique, notamment destiné au transport d'énergie et/ou à la transmission de données.

D'autres caractéristiques et avantages de la présente invention apparaîtront au cours de la description d'exemples qui va suivre, ces derniers étant donnés à titre illustratif et nullement limitatif.

Les exemples I à IV concernent des compositions qui sont toutes en mesure d'être utilisées pour réaliser des matériaux isolants et/ou de gainage et/ou de bourrage pour des câbles d'énergie et/ou de télécommunication.

Ces compositions consistent en une matrice polymère dans laquelle est dispersée une charge ignifugeante à base de liège. Le polymère est commun à chacune d'entre elles, et seules la nature et la quantité de la charge ignifugeante varient d'un échantillon à l'autre.

A cet égard, on peut observer qu'une des compositions constitue un cas extrême et à ce titre, elle doit être considérée comme une référence. Sa particularité est en effet d'être constituée uniquement de polymère. En d'autres termes, sa quantité de charge ignifugeante est nulle.

Il est à noter enfin que les quantités mentionnées dans les différents tableaux figurés ci-après sont classiquement exprimées en parties en poids pour 100 parties en poids de polymère.

### Préparation des compositions

Quoi qu'il en soit, les différentes compositions étudiées dans le cadre des exemples I à IV sont toutes préparées en suivant le même mode opératoire.

Les étapes de mélange de la matrice polymère avec chaque charge ignifugeante sont donc les suivantes:
- Consigne de température fixée à 160°C pendant toute la durée du mélange,
- introduction du polymère synthétique dans le mélangeur interne réglé à 30 tours par minute (tr/min),
- fusion du polymère synthétique à 160°C pendant 2 minutes à 30 tr/min,
- fusion à 60 tr/min pendant 2 minutes,
- introduction de la charge ignifugeante à 30 tr/min,
- mélange à 30 tr/min pendant environ 10 minutes.

### Exemple I

L'exemple I a pour objectif d'évaluer les propriétés au feu d'une charge ignifugeante à base d'un premier type de liège.

La matrice polymère utilisée est un copolymère d'éthylène et d'acétate de vinyle (EVA) contenant 28% d'acétate de vinyle, produit commercialisé sous la marque Evatane 28-03 par la société Atofina.

La charge ignifugeante est quant à elle une poudre de liège Amorim® MF1 d'origine portugaise, qui présente une granulométrie d50<100µm et d90<300µm.

Quatre échantillons de matériaux 2 à 5 sont préparés conformément au mode opératoire précédemment décrit, en utilisant des quantités croissantes de charge ignifugeante. L'échantillon 1 constitue la composition de référence. Le tableau 1 détaille les différences de compositions entre les échantillons 1 à 5.

**Tableau 1**

| Echantillons | 1 | 2 | 3 | 4 | 5 |
|---|---|---|---|---|---|
| EVA | 100 | 100 | 100 | 100 | 100 |
| Liège 1 | 0 | 10 | 20 | 30 | 50 |
| total | 100 | 110 | 120 | 130 | 150 |

Des analyses par calorimètre à cône sont conduites ensuite afin d'évaluer et de comparer les comportements au feu des échantillons 1 à 5.

Pour cela, les matériaux correspondants doivent préalablement être mis en forme de plaques carrées de 10cm de côté et de 3mm d'épaisseur. Cette opération est réalisée en utilisant une presse hydraulique chauffante, conformément à la procédure suivante:
- Fusion à 150°C pendant 3 minutes,
- mise sous pression à 150 bar pendant 2 minutes, toujours à 150°C,
- refroidissement à l'eau sous 150 bar pendant 5 minutes.

Les échantillons 1 à 5 ainsi conformés peuvent alors être testés au moyen d'un calorimètre à cône, conformément à la norme ISO 5660-1 relative au débits calorifiques des produits du bâtiment.

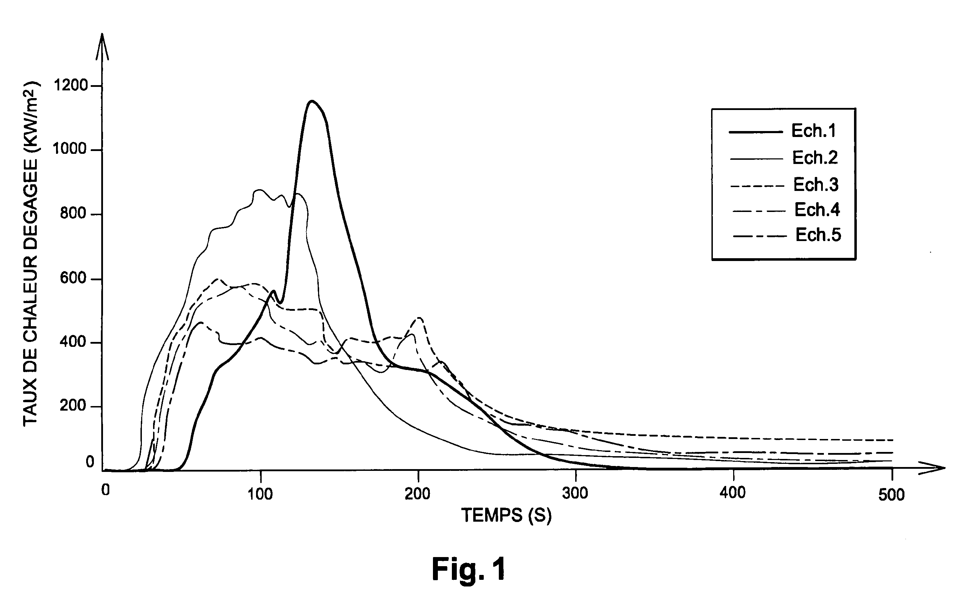

Concrètement, on mesure au cours du temps le taux de chaleur dégagée lors de la combustion de chaque échantillon. La figure 1 illustre à cet égard les comportements respectifs des différents matériaux.

Le tableau 2 résume quant lui les principales caractéristiques des échantillons 1 à 5 en terme de tenue au feu, à savoir le taux moyen de chaleur dégagée et le taux maximum de chaleur dégagée.

**Tableau 2**

| Echantillon | 1 | 2 | 3 | 4 | 5 |
|---|---|---|---|---|---|
| Taux de liège | 0 | 10 | 20 | 30 | 50 |
| % de liège | 0% | 9% | 17% | 23% | 33% |
| Taux moyen de chaleur dégagée (kW/m²) | 321.15 | 298.51 | 223.90 | 133.92 | 104.78 |
| Réduction du taux moyen de chaleur dégagée par rapport à l'échantillon 1 | 0% | 7% | 30% | 58% | 67% |
| Taux maximum de chaleur dégagée (kW/m²) | 1447.07 | 830.87 | 585.18 | 570.82 | 472.50 |
| Réduction du taux maximum de chaleur dégagée par rapport à l'échantillon 1 | 0% | 43% | 60% | 61% | 67% |

Le taux moyen de chaleur dégagée, ainsi que le taux maximum de chaleur dégagée, permettent d'évaluer l'énergie qu'un matériau dégage lors de sa combustion. Plus le taux de chaleur dégagée est faible, moins ce matériau est considéré comme combustible.

L'échantillon 1 met en évidence les propriétés de la matrice polymère, et constitue à ce titre une référence.

On observe avec l'échantillon 2, que l'ajout de seulement 10 parties en poids de liège dans ce même polymère, conduit à une diminution de 43% du taux maximum de chaleur dégagée par rapport à l'échantillon 1. L'effet actif du liège est ainsi mis en évidence. La charge ne joue pas seulement le rôle d'un diluant, qui ferait chuter le taux maximum de chaleur dégagée d'environ 9%, mais aussi celui d'une charge ignifugeante puisque la diminution atteint 43%.

Les échantillons 3 à 5 montrent quant à eux que l'augmentation du taux de liège dans le matériau composite génère une forte diminution du taux maximum de chaleur dégagée et du taux moyen de chaleur dégagée. Ainsi donc, l'ajout de 50 parties en poids de liège dans le polymère engendre une réduction de 67% du taux maximum et du taux moyen de chaleur dégagée, ce qui permet d'obtenir un matériau de très bonne réaction au feu compte tenu de sa faible teneur en charge.

### Exemple II (non inventif)

L'exemple II a pour but de déterminer les capacités de tenue au feu d'une charge ignifugeante à base d'un second type de liège.

La matrice polymère utilisée dans ce second exemple est là aussi un copolymère d'éthylène et d'acétate de vinyle (EVA) contenant 28% d'acétate de vinyle, produit commercialisé sous la marque Evatane 28-03 par la société Atofina.

Mais la charge ignifugeante est ici constituée par une poudre de liège Amorim® MF7 d'origine portugaise, qui présente une granulométrie d50=300µm et d90<600µm.

Quatre échantillons de matériaux 6 à 9 sont préparés en se conformant à nouveau au mode opératoire précédemment décrit, et en utilisant des quantités croissantes de charge ignifugeante. L'échantillon 1 est à nouveau employé en tant que référence. Le tableau 3 détaille les différences de compositions entre les échantillons numérotés 1 et 6 à 9.

**Tableau 3**

| Echantillons | 1 | 6 | 7 | 8 | 9 |
|---|---|---|---|---|---|
| EVA | 100 | 100 | 100 | 100 | 100 |
| Liège 2 | 0 | 10 | 20 | 30 | 50 |
| total | 100 | 110 | 120 | 130 | 150 |

Afin de déterminer et de comparer les comportements au feu des échantillons 6 à 9, des analyses par calorimètre à cône sont ensuite conduites de manière parfaitement analogue à ce qui a été mentionné dans le cadre de l'exemple I.

Ainsi donc, les matériaux correspondants sont conformés en plaques en suivant à l'identique les étapes du procédé de mise en forme précédemment décrit.

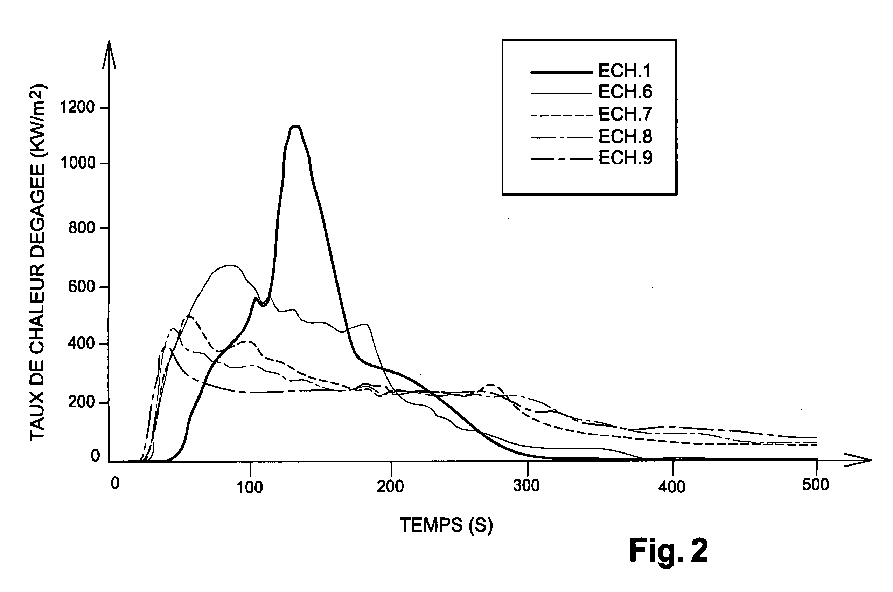

Les échantillons 6 à 9 sont alors être testés au moyen d'un calorimètre à cône, conformément à la norme ISO 5660-1 relative au débits calorifiques des produits du bâtiment. Ici aussi, on mesure au cours du temps le taux de chaleur dégagée lors de la combustion de chaque échantillon. La figure 2 illustre les comportements respectifs des différents matériaux.

Le tableau 4 résume quant lui les principales caractéristiques des échantillons 1 et 6 à 9 en terme de tenue au feu, à savoir le taux moyen de chaleur dégagée et le taux maximum de chaleur dégagée.

**Tableau 4**

| Echantillon | 1 | 6 | 7 | 8 | 9 |
|---|---|---|---|---|---|
| Taux de liège | 0 | 10 | 20 | 30 | 50 |
| % de liége | 0% | 9% | 17% | 23% | 33% |
| Taux moyen de chaleur dégagée (kW/m²) | 321.15 | 247.91 | 125.43 | 121.06 | 111.82 |
| Réduction du taux moyen de chaleur dégagée par rapport à l'échantillon 1 | 0% | 23% | 61% | 62% | 65% |
| Taux maximum de chaleur dégagée (kW/m²) | 1447.07 | 650.84 | 483.61 | 431.13 | 372.50 |
| Réduction du taux maximum de chaleur dégagée par rapport à l'échantillon 1 | 0% | 55% | 67% | 70% | 74% |

On observe avec l'échantillon 6 que l'ajout de seulement 10 parties en poids de liège dans la matrice polymère conduit à une diminution de 55% du taux maximum de chaleur dégagée par l'échantillon 1. Comme dans l'exemple I, l'effet actif du liège est donc mis en évidence. Là encore, la charge ne joue pas seulement le rôle d'un diluant, qui ferait chuter le maximum de chaleur dégagé d'environ 9%, mais aussi celui d'une charge ignifugeante puisque la diminution atteint 55%.

On remarque toutefois que l'effet actif du liège n'est pas fortement dépendant du type de liège utilisé. L'exemple II met en évidence un comportement plus performant du liège MF7 par rapport au liège MF1 de l'exemple I, mais l'effet ignifugeant reste du même ordre de grandeur (43% versus 55% à 10 parties poids).

Les échantillons 7 à 9 montrent quant à eux que l'augmentation du taux de liège dans le matériau composite génère une forte diminution du taux maximum de chaleur dégagée et du taux moyen de chaleur dégagée. Ainsi donc, l'ajout de 50 parties en poids de liège MF7 dans le polymère permet de réduire le taux maximum et le taux moyen de chaleur dégagée de respectivement 74% et 65%, ce qui permet d'obtenir un matériau de très bonne réaction au feu compte tenu de sa faible teneur en charge.

### Exemple III

L'exemple III a pour finalité d'évaluer les performances au feu d'une charge ignifugeante à base d'un troisième type de liège.

La matrice polymère utilisée est ici encore un copolymère d'éthylène et d'acétate de vinyle (EVA) contenant 28% d'acétate de vinyle, produit commercialisé sous la marque Evatane 28-03 par la société Atofina.

Mais la charge ignifugeante est cette fois composée d'une poudre de liège d'origine française, de marque Liègeur® , dotée d'une granulométrie d50<100µm et d90<300µm.

Quatre échantillons de matériaux 10 à 13 sont préparés en se conformant toujours au mode opératoire commun aux exemples I à IV, et en utilisant des quantités croissantes de charge ignifugeante. Le tableau 5 détaille les différences de compositions entre les échantillons référencés 1 et 10 à 13.

**Tableau 5**

| Echantillons | 1 | 10 | 11 | 12 | 13 |
|---|---|---|---|---|---|
| EVA | 100 | 100 | 100 | 100 | 100 |
| Liège 3 | 0 | 10 | 20 | 30 | 50 |
| total | 100 | 110 | 120 | 130 | 150 |

Une fois encore, les matériaux correspondants sont préalablement mis en forme de plaques, avant de subir des analyses par calorimètre à cône en vue d'évaluer et de comparer les comportements au feu des échantillons 10 à 13. La procédure suivie est encore une fois la norme ISO 5660-1 relative au débits calorifiques des produits du bâtiment.

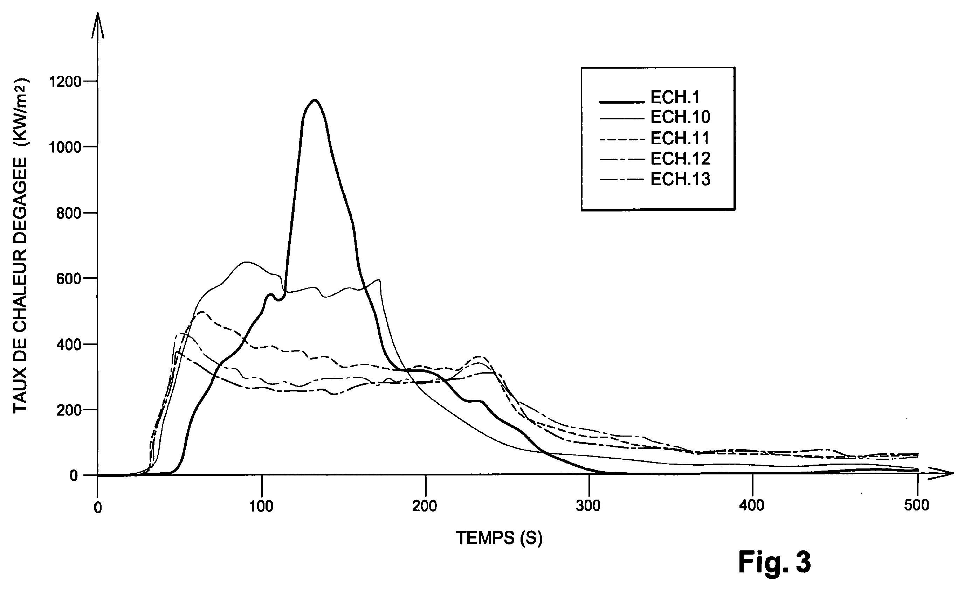

Le taux de chaleur dégagée est ainsi mesuré au cours du temps, lors de la combustion de chaque échantillon. La figure 3 illustre les comportements respectifs des différents matériaux.

Le tableau 6 résume quant lui les principales caractéristiques des échantillons 1 et 10 à 13 en terme de tenue au feu, à savoir le taux moyen de chaleur dégagée et le taux maximum de chaleur dégagée.

**Tableau 6**

| Echantillon | 1 | 10 | 11 | 12 | 13 |
|---|---|---|---|---|---|
| Taux de liège | 0 | 10 | 20 | 30 | 50 |
| % de liège | 0% | 9% | 17% | 23% | 33% |
| Taux moyen de chaleur dégagée (kW/m²) | 321,15 | 172.21 | 150.61 | 109.39 | 83.40 |
| Réduction du taux moyen de chaleur dégagée par rapport à l'échantillon 1 | 0% | 46% | 53% | 66% | 74% |
| Taux maximum de chaleur dégagée (kW/m²) | 1447.07 | 671.82 | 505.71 | 432.01 | 377.24 |
| Réduction du taux maximum de chaleur dégagée par rapport à l'échantillon 1 | 0% | 54% | 65% | 70% | 74% |

Cet exemple III permet de mettre en évidence un effet ignifugeant comparable à ceux décrits dans le cadre des exemples précédents. Le liège utilisé est encore d'une nature différente, mais l'effet ignifugeant reste du même ordre.

Cependant, on remarque que ce nouveau type de liège permet de diminuer plus fortement le taux moyen de chaleur dégagée par rapport aux exemples I et II.

La réduction du taux maximum de chaleur dégagée des échantillons 10 à 13 est quant à elle identique à celle obtenue pour l'exemple II avec les échantillons 6 à 9.

La diminution du taux moyen et du taux maximum de chaleur dégagée, observée entre les échantillons de 10 à 13, montre que l'on peut obtenir un matériau ayant une exceptionnelle réaction au feu avec 74% de diminution du taux de chaleur dégagée, et à seulement 50 parties en poids de liège pour 100 parties en poids de polymère.

### Exemple IV (non inventif)

L'exemple IV a quant à lui pour objectif de comparer les performances au feu de charges ignifugeantes selon l'invention, avec celles de charges conventionnelles de l'état de la technique.

Les échantillons 6, 8 et 9, qui représentent des matériaux issus de compositions chargées avec du liège, sont en tout point conformes à ceux préparés et testés dans le cadre de l'exemple II, (non inventif).

Les échantillons A, B et C, qui vont servir ici de références, emploient pour leur part des charges ignifugeantes constituées de trihydroxyde d'aluminium, communément désigné par l'abréviation ATH. Le produit utilisé est du Martinal OL-104 de la société Martinswerk GmbH. Leurs matrices polymères sont toutes constituées une nouvelle fois par un copolymère d'éthylène et d'acétate de vinyle (EVA) contenant 28% d'acétate de vinyle, en l'occurrence toujours de l'Evatane 28-03 de la société Atofina.

Les trois échantillons de matériaux A, B et C sont préparés en se conformant à nouveau au mode opératoire commun aux exemples I à IV, et en utilisant des quantités à croissantes de charge ignifugeante. Le tableau 7 détaille les particularités de chacune des compositions mises en jeu.

**Tableau 7**

| Echantillons | EVA(%) | ATH(%) | Liège(%) |
|---|---|---|---|
| 1 | 100 | 0 | 0 |
| A | 91 | 9 | 0 |
| 6 | 91 | 0 | 9 |
| B | 77 | 23 | 0 |
| 8 | 77 | 0 | 23 |
| C | 67 | 33 | 0 |
| 9 | 67 | 0 | 33 |

Les échantillons sont ensuite testés par cône calorimètre afin d'évaluer puis de comparer leurs tenues au feu respectives. Leur mise en forme préalable s'effectue là encore en suivant la procédure définie par la norme ISO 5660-1 relative au débits calorifiques des produits du bâtiment.

Le taux de chaleur dégagée est donc mesuré au cours du temps, lors de la combustion de chaque échantillon. Le tableau 8 résume les principales caractéristiques des différents échantillons en terme de tenue au feu, à savoir le taux moyen de chaleur dégagée et le taux maximum de chaleur dégagée.

**Tableau 8**

| Ech. | Taux moyen de chaleur dégagée (kW/m²) | Taux maximum de chaleur dégagée (kW/m²) | Réduction du taux maximum de chaleur dégagée par rapport à l'échantillon 1 |
|---|---|---|---|
| 1 | 321.15 | 1447.07 | 0% |
| A | 242.02 | 1273.76 | 12% |
| 6 | 247.91 | 650.84 | 55% |
| B | 278.22 | 939.51 | 35% |
| 8 | 121.06 | 431.13 | 70% |
| C | 166.95 | 610.86 | 58% |
| 9 | 111.82 | 372.50 | 74% |

On observe que les échantillons 6, 8 et 9 sont respectivement plus performants que les échantillons A, B et C. En effet, alors que la diminution du taux maximum de chaleur dégagée est de l'ordre de 12% pour un composite contenant 10 parties en poids d'hydroxyde d'aluminium, elle atteint 55% pour un composite contenant la même quantité de liège.

L'effet actif ignifugeant de l'hydroxyde d'aluminium, connu dans l'art antérieur, est confirmé avec les échantillons A, B et C puisque la diminution de taux de chaleur dégagée est supérieure à une simple réduction due à la dilution du polymère combustible. Cependant, l'effet ignifugeant du liège dans ce même polymère apparaît clairement plus important: A 10 parties en poids (échantillons A et 6) le liège est plus de 4,5 fois plus actif que l'hydroxyde d'aluminium, à 30 parties (échantillons 8 et B) le liège est 2 fois plus actif que l'hydroxyde d'aluminium, et à 50 parties le liège permet encore d'améliorer la réaction au feu d'environ 30% par rapport à l'hydroxyde d'aluminium.

On confirme donc par cet exemple que le liège joue un rôle ignifugeant actif exceptionnel par rapport aux systèmes de l'art antérieur.

## Revendications

1. Composition résistante au feu notamment pour un matériau de câble d'énergie et/ou de télécommunication, ladite composition comprenant un polymère de type thermoplastique et une charge ignifugeante comportant du liège sous forme de poudre, **caractérisée en ce que** la granulométrie D50 de la poudre de liège est inférieure à 200 µm.

2. Composition selon la revendication 1, **caractérisée en ce que** le polymère est choisi parmi un polyéthylène, un polypropylène, un copolymère d'éthylène et de propylène (EPR), un terpolymère-éthylène-propylènediène (EPDM), un copolymère d'éthylène et d'acétate de vinyle (EVA), un copolymère d'éthylène et d'acrylate de méthyle (EMA), un copolymère d'éthylène et d'acrylate d'éthyle (EEA), un copolymère d'éthylène et d'acrylate de butyle (EBA), un copolymère d'éthylène et d'octène, un polymère à base d'éthylène, un polymère à base de polypropylène, un polyétherimide, un polyuréthane thermoplastique, un polyester, un polyamide ou un quelconque mélange de ces composants.

3. Composition selon la revendication 1 ou 2, **caractérisée en ce qu'**elle comporte entre 5 et 100 parties en poids de charge ignifugeante pour 100 parties en poids de polymère, et de préférence entre 10 et 50 parties en poids de charge ignifugeante.

4. Composition selon l'une quelconque des revendications 1 à 3, **caractérisée en ce qu'**elle comporte en outre au moins un agent ignifugeant secondaire.

5. Composition selon la revendication 4, **caractérisée en ce que** chaque agent ignifugeant secondaire est choisi parmi les composés contenant du phosphore tels que les phosphates organiques ou inorganiques, les composés contenant de l'antimoine tels que l'oxyde d'antimoine, les hydroxydes métalliques tels que l'hydroxyde d'aluminium et l'hydroxyde de magnésium, les composés à base de bore tels que les borates, les carbonates des métaux alcalins des groupes IA et IIA comme les carbonates de calcium, sodium, potassium ou magnésium et les hydroxycarbonates correspondants, les composés à base d'étain tels que stannates et hydroxystannates, la mélamine et ses dérivés tels que les mélamines phosphates, les résines formophénoliques.

6. Composition selon l'une quelconque des revendications 1 à 5, **caractérisée en ce qu'**elle comporte en outre au moins un additif choisi parmi le groupe des lubrifiants, des plastifiants, des stabilisants thermiques, des pigments, des antioxydants, et des stabilisants ultraviolets.

7. Câble comportant au moins un élément conducteur s'étendant à l'intérieur d'au moins un revêtement isolant, **caractérisé en ce qu'**au moins un revêtement isolant est réalisé à partir d'une composition selon l'une quelconque des revendications précédentes.

8. Câble comportant au moins un élément conducteur s'étendant à l'intérieur d'au moins un revêtement isolant, **caractérisé en ce qu'**il comprend en outre au moins une gaine de protection réalisée à partir d'une composition selon l'une quelconque des revendications 1 à 6.

## Claims

1. A fire-resistant composition for a power and/or telecommunications cable material, said composition comprising a polymer of the thermoplastic type and a fire-retardant filler including cork as a powder, **characterized in that** the D50 grain size of the cork powder is less than 200 µm.

2. The composition according to claim 1, **characterized in that** the polymer is selected from polyethylene, polypropylene, ethylene and propylene copolymer (EPR), ethylene-propylene-diene terpolymer (EPDM), ethylene and vinyl acetate copolymer (EVA), ethylene and methyl acrylate copolymer (EMA), ethylene and ethyl acrylate copolymer (EEA), ethylene and butyl acrylate copolymer (EBA), ethylene and octane copolymer, ethylene-based polymer, polypropylene-based polymer, polyetherimide, thermoplastic polyurethane, polyester, polyamide or any mixture of these components.

3. The composition according to claim 1 or 2, **characterized in that** it includes between 5 and 100 parts by weight of fire-retardant filler per 100 parts by weight of polymer, and preferably between 10 and 50 parts by weight of fire-retardant filler.

4. The composition according to any of claims 1 to 3, **characterized in that** it further includes at least one secondary fire-retardant agent.

5. The composition according to claim 4, **characterized in that** each secondary fire-retardant agent is selected from compounds containing phosphorus such as organic or inorganic phosphates, compounds containing antimony such as antimony oxide, metal hydroxides such as aluminium hydroxide and magnesium hydroxide, compounds based on boron such as borates, carbonates of alkaline metals of Groups IA and IIA such as calcium, sodium, potassium or magnesium carbonates and the corresponding hydroxycarbonates, compounds based on tin such as stannates and hydroxystannates, melamine and its derivatives such as melamine phosphates, formophenolic resins.

6. The composition according to any of claims 1 to 5, **characterized in that** it further includes at least one additive selected from the group of lubricants, plasticizers, thermal stabilizers, pigments, antioxidants, and ultraviolet stabilizers.

7. A cable including at least one conducting element extending inside at least one insulating coating, **characterized in that** at least one insulating coating is made from a composition according to any of the preceding claims.

8. A cable including at least one conducting element extending inside at least one insulating coating, **characterized in that** it further comprises at least one protective sheath made from a composition according to any of claims 1 to 6.

## Patentansprüche

1. Feuerfeste Zusammensetzung, insbesondere als Material für Energie- und/oder Telekommunikationskabel, wobei die Zusammensetzung ein Polymer des thermoplastischen Typs und einen flammenhemmenden Füllstoff umfasst, einschließend Kork in Form von Pulver, **dadurch gekennzeichnet, dass** die Korngrößenbestimmung D50 des Korks unter 200 µm liegt.

2. Zusammensetzung nach Anspruch 1, **dadurch gekennzeichnet, dass** das Polymer unter einem Polyethylen, einem Polypropylen, einem Ethylen- und Propylen-Copolymer (EPR), einem Terpolymer-Ethylen-Propylen-Dien (EPDM), einem Ethylen- und Vinylacetatcopolymer (EVA), einem Ethylen- und Methylacrylatcopolymer (EMA), einem Ethylen- und Ethylacrylatcopolymer (EEA), einem Ethylen- und Butylacrylatcopolymer (EBA), einem Ethylen- und Oktencopolymer, einem Polymer auf der Grundlage von Ethylen, einem Polymer auf der Grundlage von Polypropylen, einem Polyetherimid, einem thermoplastischen Polyurethan, einem Polyester, einem Polyamid oder irgendeiner Mischung aus diesen Komponenten gewählt wird.

3. Zusammensetzung nach Anspruch 1 oder 2, **dadurch gekennzeichnet, dass** sie zwischen 5 und 100 Gewichtsteile flammenhemmenden Füllstoff pro 100 Gewichtsteile Polymer und vorzugsweise zwischen 10 und 50 Gewichtsteile flammenhemmenden Füllstoff umfasst.

4. Zusammensetzung nach einem der Ansprüche 1 bis 3, **dadurch gekennzeichnet, dass** sie außerdem zumindest ein sekundäres flammenhemmendes Mittel umfasst.

5. Zusammensetzung nach Anspruch 4, **dadurch gekennzeichnet, dass** jedes sekundäre flammenhemmende Mittel unter den Verbindungen ausgewählt wird, umfassend Phosphor wie z.B. die organischen oder anorganischen Phosphate, den Verbindungen umfassend Antimon wie z.B. Antimonoxyd, den metallischen Hydroxiden wie z.B. Aluminiumhydroxid und Magnesiumhydroxid, den Verbindungen auf der Grundlage von Bor wie z.B. den Boraten, den Carbonten der alkalinen Metalle der Gruppen IA und IIA wie den Kalzium-, Natrium-, Kalium oder Magnesiumcarbonaten und den entsprechenden Hydroxycarbonaten, den Verbindungen auf der Grundlage von Zinn wie z.B. Stannaten und Hydroxystannaten, dem Melamin und seinen Derivaten wie z.B. den Melaminphosphaten, den formophenolischen Harzen.

6. Zusammensetzung nach einem der Ansprüche 1 bis 5, **dadurch gekennzeichnet, dass** sie außerdem mindestens einen Zusatzstoff umfasst, ausgewählt aus der Gruppe der Schmierstoffe, der Weichmacher, der thermischen Stabilisatoren, der Pigmente, der Antioxidationsmittel und der ultravioletten Stabilisatoren.

7. Kabel, umfassend zumindest ein leitendes Element, das sich im Inneren zumindest einer Isolierbeschichtung erstreckt, **dadurch gekennzeichnet, dass** mindestens eine Isolierbeschichtung ausgehend von einer Zusammensetzung nach einem der vorhergehenden Ansprüche durchgeführt ist.

8. Kabel, umfassend zumindest ein leitendes Element, das sich im Innern von zumindest einer Isolierbeschichtung erstreckt, **dadurch gekennzeichnet, dass** es außerdem zumindest eine Schutzhülle umfasst, durchgeführt ausgehend von eine Zusammensetzung nach einem der Ansprüche 1 bis 6.
